# EUROPÄISCHE PATENTSCHRIFT

(11) **EP 0 752 791 B1**
(45) Veröffentlichungstag und Bekanntmachung des Hinweises auf die Patenterteilung: **10.04.2002**
(21) Anmeldenummer: 96201865.1
(22) Anmeldetag: 03.07.1996
(51) Int. Cl.: H04N 9/83, H04N 9/84

(54) **Schaltungsanordnung zur Farbsignal-Verarbeitung**
Circuit for colour signal processing
Circuit de traitement de signal couleur

(30) Priorität: 07.07.1995 DE 19524794
(43) Veröffentlichungstag der Anmeldung: 08.01.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Heinemann, Herbert, 22335 Hamburg (DE)
(74) Vertreter: von Laue, Hanns-Ulrich, Dipl.-Ing.

(56) Entgegenhaltungen:
- US-A- 4 178 606
- US-A- 4 991 026

## Beschreibung

Die Erfindung betrifft eine Schaltungsanordnung zur Verarbeitung eines von einem Videorekorder wiedergegebenen, einem Träger mit einer ersten Träger-Frequenz aufmodulierten Farbsignals (Color-Under-Signal).

Gemäß den üblichen Aufzeichnungsnormen für Videosignale bei Consumer-Videorekordem, insbesondere bei der VHS-Norm, ist vorgesehen, das Farbsignal einer Trägerfrequenz aufzumodulieren, deren Frequenz niedriger ist als die Trägerfrequenz, der das Leuchtdichtesignal aufmoduliert wird. Wiedergabeseitig ist ein dermaßen aufgezeichnetes Farbsignal wieder auf eine höhere Trägerfrequenz umzusetzen, welche entsprechend der Norm des Farbsignals, beispielsweise der PAL- oder NTSC-Norm, vorgesehen ist. Ferner ist es bei Videorekordern üblich, in das wiedergegebene Farbsignal von Nachbarspuren übersprechende Farbsignale zu unterdrücken. Hierzu können beispielsweise Kammfilter eingesetzt werden.

Bei einer bekannten Anordnung dieser Art, die in dem Philips IC TDA 9715 eingesetzt wird, wird diese Umsetzung auf die Sollfrequenz des Farbträgers vor dem Kammfilter vorgenommen. Dies hat zwar den Vorteil, daß das Kammfilter bereits in dem frequenzgeregelten Bereich der Anordnung liegt, jedoch wird das Kammfilter mit der vierfachen Farbträgerfrequenz getaktet. Da es sich bei dieser bereits um die höhere Farbträgerfrequenz handelt, auf die das Signal umgesetzt wurde, entsteht ein beträchtlicher Speicherbedarf.

Bei einer anderen bekannten Anordnung der eingangs genannten Art, die aus der EP-A-631 446 bekannt ist, ist das Kammfilter vor der Umsetzung des Color-Under-Signals auf die höhere Trägerfrequenz entsprechend der Farbnorm vorgesehen. Hiebei wird zwar weniger Speicherplatz benötigt, jedoch wird der Kammfilteranordnung unmittelbar das vom Band gelesene Color-Under-Farbsignal zugeführt. Dieses Farbsignal kann gegebenenfalls beträchtlichen Schwankungen der Trägerfrequenz ausgesetzt sein. Solche treten beispielsweise beim Wechsel verschiedener Wiedergabegeschwindigkeiten auf. Bei derartigen Schwankungen der Trägerfrequenz kann die Verarbeitung des Farbsignals insbesondere in der Kammfilteranordnung nicht mehr sauber erfolgen, so daß nachfolgende Schaltungsanordnungen zur Verarbeitung des umgesetzten Farbsignals außer Tritt geraten. Dies äußert sich dann in einem Ausfall der Farbwiedergabe.

Es ist Aufgabe der Erfindung, eine Schaltungsanordnung der eingangs genannten Art anzugeben, welche die Umsetzung und Filterung des Farbsignals mit möglichst wenig Speicheraufwand gestattet und welche unempfindlich gegen Schwankungen der Farbträgerfrequenz des vom Band gelesenen Signals ist.

Diese Aufgabe ist erfindungsgemäß dadurch gelöst, daß das der ersten Träger-Frequenz aufmodulierte Farbsignal einem ersten Mischer zugeführt wird, mittels welchem das Farbsignal auf eine zweite Träger-Frequenz umgesetzt wird, welche höher ist als die erste Träger-Frequenz,
daß das Ausgangssignal des ersten Mischers einer Kammfilteranordnung zugeführt wird, mittels welcher von Nachbarspuren in das wiedergegebene Farbsignal übersprechende Farbsignale unterdrückt werden,
und daß das Ausgangssignal der Kammfilteranordnung einem zweiten Mischer zugeführt wird, mittels welchem das kammgefilterte Signal auf eine dritte Träger-Frequenz umgesetzt wird, welche höher ist als die zweite Träger-Frequenz.

Das vom Band gelesene, einem Farbträger mit relativ niedriger Frequenz aufmodulierte Farbsignal wird also zunächst in einem ersten Mischer umgesetzt. Dabei wird die Farbträgerfrequenz auf eine zweite Trägerfrequenz umgesetzt, welche höher ist als die Trägerfrequenz, mit der das Farbsignal vom Band gelesen wurde. Erst das Ausgangssignal dieses ersten Mischers wird einer Kammfilteranordnung zugeführt, welche dazu dient, Farbsignale, die von den Nachbarspuren in das zu lesende Farbsignal übersprechen, zu unterdrücken. Das Ausgangssignal der Kammfilteranordnung wird dann einem zweiten Mischer zugeführt, in welchem dieses kammgefilterte Signal auf eine Trägerfrequenz umgesetzt wird, wie sie entsprechend der Wiedergabenorm des Farbsignals vorgesehen ist.

Diese zweifache Umsetzung des vom Band gelesenen Farbsignals auf zwei verschiedene Trägerfrequenzen hat insbesondere den Vorteil, daß die Kammfilteranordnung einerseits dem ersten Mischer nachgeschaltet ist, so daß sie bereits in einem bezüglich der Frequenz umgesetzten und somit geregelten Bereich der Schaltungsanordnung liegt. Andererseits wird der Kammfilteranordnung noch nicht das auf die entsprechend der Wiedergabenorm des Farbsignals vorgesehene Farbträgerfrequenz umgesetzte Signal geliefert, sondern ein Farbsignal, das auf einen Farbträger mit niedrigerer Frequenz umgesetzt ist. Dies hat zur Folge, daß die Kammfilteranordnung mit niedrigerer Frequenz als in dem anderen Falle getaktet werden kann. Durch diese Anordnung werden also zwei Vorteile erreicht. Zum einen ist die Kammfilteranordnung unempfindlich gegen Schwankungen der Trägerfrequenz des vom Band gelesenen Farbsignals, da das Kammfilter bereits im geregelten Bereich angeordnet ist. In einem Videorekorder treten also weniger Farbausfälle auf. Andererseits ist der Speicherbedarf für die Kammfilteranordnung relativ gering, da das ihr zugeführte Farbsignal einem Farbträger mit einer Frequenz aufmoduliert ist, die niedriger ist als die gemäß der Kammfilteranordnung vorgesehene Trägerfrequenz des Farbsignals.

Gemäß einer vorteilhaften Ausgestaltung der Erfindung ist vorgesehen, daß es sich bei der dritten Träger-Frequenz um die entsprechend einer Farbsignal-Norm vorgesehene Farbträgerfrequenz handelt. Dies ist vorteilhaft, da auf diese Weise ein weiteres Umsetzen der Farbträgerfrequenz nicht erforderlich ist.

Handelt es sich um ein Farbsignal der PAL-Norm würde in diesem Falle, wie gemäß einer weiteren Ausgestaltung der Erfindung vorgesehen ist, die dritte Träger-Frequenz 4,43 MHz betragen.

Zur Wiedergabe eines Signals der PAL-Norm würde dieses, wie gemäß einer weiteren Ausgestaltung der Erfindung vorgesehen ist, mit einer Träger-Frequenz vom Band gelesen werden, die das (40+1/8)-fache der Zeilenfrequenz des Bildsignals bzw. des Farbsignals beträgt. In diesem Falle kann die zweite Träger-Frequenz, auf die das Farbsignal mittels des ersten Mischers umgesetzt wird, vorteilhaft 4,43/2 MHz betragen. Damit wird beispielsweise gegenüber dem Stand der Technik der Speicherbedarf in der Kammfilteranordnung halbiert.

Der erste und der zweite Mischer arbeiten in der Weise, daß sie einerseits das ihnen jeweils zugeführte Farbsignal, das einem Farbträger aufmoduliert ist, mit einem Mischsignal mischen. Dieses Mischsignal wird aus dem Farbträger abgeleitet. Dies hat zur Folge, daß Schwankungen der Farbträgerfrequenz ausgeregelt werden, da diese Schwankungen für das Mischsignal in gleicher Weise gelten, wie für das zu mischende, dem Mischer ebenfalls zugeführte Farbsignal, das einem Träger aufmoduliert ist. Dies hat auch zur Folge, daß in oben beschriebener Weise die Kammfilteranordnung, die in der erfindungsgemäßen Anordnung dem ersten Mischer nachgeschaltet ist, im frequenzgeregelten Bereich der Anordnung angeordnet ist.

Für die Gewinnung des Mischsignales in der erfindungsgemäßen Schaltungsanordnung gibt es einerseits die nach einer weiteren Ausgestaltung der Erfindung vorgesehene Möglichkeit, daß dem ersten Mischer ein Mischsignal zugeführt wird, das mit dem der ersten Träger-Frequenz aufmodulierten Farbsignal gemischt wird, daß das Mischsignal aus einem Ausgangssignal eines spannungsgesteuerten Oszillator abgeleitet ist, daß die Frequenz des Ausgangssignals des spannungsgesteuerten Oszillators in Abhängigkeit des Ausgangssignals eines Phasenkomparators gesteuert wird, dem eingangsseitig ein Signal mit der dritten Soll-Träger-Frequenz und das Ausgangssignal des ersten Mischers zugeführt wird.

In diesem Falle wird das Mischsignal durch das Ausgangssignal des Phasenkomparators gesteuert, dem einerseits ein Signal mit einer festen Frequenz, nämlich der halben Soll-Träger-Frequenz des Farbsignals entsprechend der Farbsignalnorm und dem außerdem das Ausgangssignal des ersten Mischers der Anordnung zugeführt wird. Aus dem Phasenvergleich dieser beiden Signale wird das Mischsignal abgeleitet, das dem ersten Mischer zugeführt wird. Dies hat zur Folge, daß das Ausgangssignal des ersten Mischers keine Schwankungen mehr der Farbträgerfrequenz aufweist. Diese Schwankungen werden durch die genannte Anordnung ausgeregelt. Damit befindet sich die erste Kammfilteranordnung im frequenzgeregelten Bereich und ist unempfindlich gegen Schwankungen der Farbträgerfrequenz des vom Band gelesenen Farbsignals, wie sie beispielsweise bei Sonderbetriebsarten auftreten.

Eine zweite Möglichkeit zur Ableitung des Mischsignals für den ersten Mischer besteht darin, daß dem ersten Mischer ein Mischsignal zugeführt wird, das mit dem der ersten Träger-Frequenz aufmodulierten Farbsignal gemischt wird, daß das Mischsignal aus einem Ausgangssignal eines spannungsgesteuerten Oszillator abgeleitet ist, daß die Frequenz des Ausgangssignals des spannungsgesteuerten Oszillators in Abhängingkeit des Ausgangssignals eines Phasenkomparators gesteuert wird, dem eingangsseitig ein Signal mit der dritten Soll-Träger-Frequenz und das Ausgangssignal des zweiten Mischers zugeführt wird.

Bei dieser zweiten Möglichkeit ist im Prinzip eine gleichartige Anordnung vorgesehen, jedoch werden dem Phasenkomparator das Signal mit der Soll-Träger-Frequenz und das Ausgangssignal des zweiten Mischers zugeführt. In der Grundfunktion ergeben sich hierbei keine wesentlichen Unterschiede zu der ersten Möglichkeit der Ableitung des Mischsignals für den ersten Mischer.

Nachfolgend werden anhand der Zeichnung zwei Ausführungsbeispiele der Erfindung näher erläutert. Es zeigen:
Fig. 1 eine erste Ausführungsform der erfindungsgemäßen Schaltungsanordnung, bei der zur Gewinnung des Mischsignals für den ersten Mischer das Ausgangssignal des zweiten Mischers herangezogen wird, und
Fig. 2 eine zweite Ausführungsform der Anordnung, bei der zur Gewinnung des Mischsignals für den ersten Mischer das Ausgangssignal des ersten Mischers herangezogen wird.

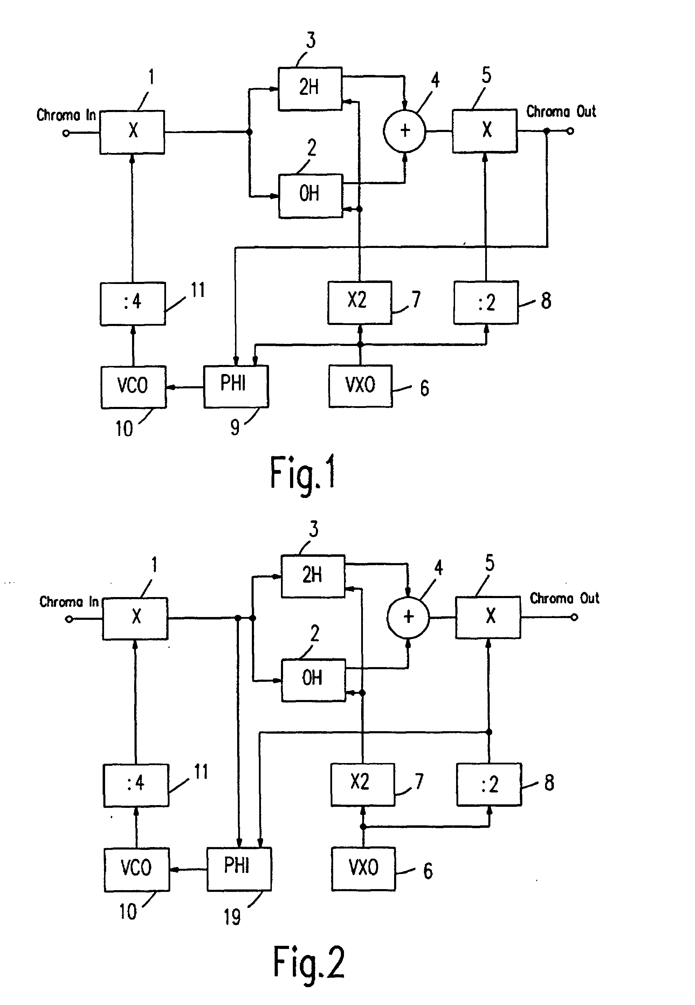

Eine erste in Fig. 1 in Form eines Blockschaltbildes dargestellte Ausführungsform der erfindungsgemäßen Schaltungsanordnung zur Verarbeitung eines mittels in der Figur nicht dargestellten Videoköpfen von einem Magnetband eines Videorekorders wiedergegebenen und ggf. verstärkten, einem Träger mit einer ersten Träger-Frequnz aufmodulierten Signals weist eingangsseitig einen ersten Mischer 1 auf. Diesem Mischer wird das vom Band gelesene, der ersten Träger-Frequenz aufmodulierte Farbsignal zugeführt.

Das Ausgangssignal dieses ersten Mischers 1 gelangt an eine Kammfilteranordnung, welche eine erste Verzögerungsanordnung 2, eine zweite Verzögerungsanordnung 3 und einen Addierer 4 aufweist.

Das Ausgangssignal des ersten Mischers 1 gelangt an die Eingänge der beiden Verzögerungsanordnungen 2 und 3. Deren Ausgangssignale werden in dem Addierer 4 additiv überlagert.

Die erste Verzögerungsanordnung 2 weist eine Verzögerungszeit von 0 H, die zweite Verzögerungsanordnung 3 eine solche von 2 H auf. Hierbei bedeutet H die Dauer einer Bildzeile des wiedergegebenen Bildsignals bzw. des in ihm enthaltenen Farbsignals. In dem in der Fig. 1 dargestellten Ausführungsbeispiel wird davon ausgegangen, daß es sich bei dem Farbsignal um ein solches der PAL-Norm handelt. In diesem Falle wird durch Überlagerung der Ausgangssignale der beiden Verzögerungsanordnungen ein Unterdrücken der von Nachbarspuren übersprechenden Farbsignale in das eigentlich zu lesende Farbsignal dadurch erreicht, daß das unverzögerte und das um die Dauer zweier Bildzeilen verzögerte Farbsignal addiert werden.

Die erste Verzögerungsanordnung 2 weist an sich eine nur sehr geringe Verzögerungszeit auf, jedoch wird das ihr zugeführte Farbsignal Speicherelementen der gleichen Bauart zugeführt, wie sie in der zweiten Verzögerungsanordnung 3 vorgesehen sind. Damit wird erreicht, daß das Farbsignal in der ersten Verzögerungsanordnung 2, die das Farbsignal an sich nicht verzögert, dem gleichen Amplitudengang und damit den gleichen Verfälschungen des Signals unterworfen ist, wie das der zweiten Verzögerungsanordnung 3 zugeführte Signal, das in dieser um die Dauer zweier Bildzeilen verzögert wird.

Das Ausgangssignal der Kammfilteranordnung und somit das Ausgangssignal des Addierers 4 wird einem zweiten Mischer 5 zugeführt. Dessen Ausgangssignal bildet das Ausgangssignal der Schaltungsanordnung und ist in der Fig. mit Chroma Out gekennzeichnet. Sowohl dem ersten Mischer 1 wie auch dem zweiten Mischer 5 wird für den Mischvorgang jeweils ein Mischsignal zugeführt. Dieses wird mittels der folgend beschriebenen Anordnung gewonnen.

In der Schaltungsanordnung ist ein quarzgetakteter Oszillator 6 vorgeshen. Dieser liefert ausgangsseitig ein Signal mit einer Frequenz, welche der Farbträgerfrequenz entsprechend der Wiedergabenorm des gelesenen Farbsignals entspricht. Es handelt sich hierbei also nicht um die Farbträgerfrequenz des gelesenen Signals, sondern um diejenige Farbträgerfrequenz mit der nachfolgende Geräte, beispielsweise ein Fernseher, das Farbsignal weiterverarbeiten können. Beispielsweise bei Signalen der PAL-Norm handelt es sich um die Frequenz 4,43 MHz.

Das Ausgangssignal dieses Oszillators wird einem Multiplizierer 7 zugeführt, der dieses Signal mit dem Faktor 2 multipliziert. Das Ausgangssignal dieses Multiplizierers 7 wird der ersten Verzögerungsanordnung 2 und der zweiten Verzögerungsanordnung 3 der Kammfilteranordnung zwecks deren Taktung zugeführt.

Das Ausgangssignal des Oszillators 6 wird außerdem einer Teilerschaltung 8 zugeführt, die das Signal durch 2 teilt. Das Ausgangssignal dieser Teilerschaltung bildet das Mischsignal des zweiten Mischers 5. In dem zweiten Mischer 5 wird also dieses Mischsignal mit dem zweiten Eingangssignal, das das Ausgangsignal der Kammfilteranordnung und damit deren Addierers 4 ist, gemischt.

Das Ausgangssignal des Oszillators 6 gelangt ferner an einen Phasenkomparator 9, dem außerdem das Ausgangssignal des zweiten Mischers 5 zugeführt wird. Der Phasenkomparator 9 bildet ein Phasenvergleichssignal dieser beiden ihm zugeführten Signale, welches einem spannungsgesteuerten Oszillator zugeführt wird. Dieser liefert ein Ausgangssignal, dessen Frequenz abhängig ist von der Spannung des von dem Phasenkomparator 9 gelieferten Phasenvergleichssignals.

Das Ausgangssignal des spannungsgesteuerten Oszillators 10 gelangt an einen Teiler 11, in dem dieses Signal durch 4 geteilt wird. Das Ausgangssignal des Teilers 11 bildet das Mischsignal für den ersten Mischer 1, in welchem dieses mit dem ihm zugeführten Eingangssignal Chroma In gemischt wird.

Das vom Band gelesene, einer ersten Farbträgerfrequenz aufmodulierte Farbsignal, das dem ersten Mischer zugeführt wird, wird mittels diesem auf eine zweite Träger-Frequenz umgesetzt. In dem Ausführungsbeispiel gemäß Fig. 1 handelt es sich dabei um die halbe Farbträgerfrequenz entsprechend der Farbsignalnorm. Diese Soll-Farbträgerfrequenz entsprchend der Farbsignalnorm wird im folgenden als F_{SC} bezeichnet. Der spannungsgesteuerte Oszillator 10 arbeitet bei einer nicht vorliegenden Phasenabweichung und damit einem Spannungssignal Null des Phasenkomparators mit einer Ausgangsfrequenz von 4(1/2 F_{SC} + 40 1/8 F_{H}). Die Farbträgerfrequenz des vom Band gelesenen Farbsignals, das in der Fig. 1 mit Chroma In bezeichnet ist, beträgt (40 1/8)F_{H}. Hierin bezeichnet F_{H} die Horizontalfrequenz des Bildsignals und damit des Farbsignals, also die Zeilenfrequenz dieser Signale und F_{SC} die gemäß der Übertragungsnorm des Farbsignals vorgesehene Soll-Farbträgerfrequenz.

Durch die Wahl der Frequenz des spannungsgesteuerten Oszillators und das Herunterteilen von dessen Ausgangssignal mittels des Teilers 11 wird durch Mischung dessen Ausgangssignals und des der Schaltungsanordnung eingangsseitig zugeführten Color-Under-Signals eine Umsetzung der Farbträgerfrequenz auf die Frequenz 1/2 F_{SC} erzielt. Das auf diese Trägerfrequenz umgesetzte Farbsignal wird der Kammfilteranordnung zugeführt.

Damit ist die Frequenz des Farbträgers dieses Signals gemäß diesem Ausführungsbeispiel nur halb so groß wie die Frequenz des Farbträgers entsprechend der Wiedergabenorm des Farbsignals. Damit wird erreicht, daß die beiden Speicheranordnungen 2 und 3 der Kammfilteranordnung nur mit einer Frequenz 2 F_{SC} getaktet werden müssen. Damit wird gegenüber bekannten Anordnungen nach dem Stande der Technik, die mit 4 F_{SC} getaktet werden müssen, eine Halbierung des Speicherbedarfs in den Speicheranordnungen 2 und 3 erzielt.

Das Ausgangssignal der Kammfilteranordnung wird in dem Mischer 5 auf eine dritte Trägerfrequenz umgesetzt wird. In der Anordnung gemäß Fig. 1 beträgt diese Frequenz F_{SC}, also diejenige Farbträgerfrequenz, die entsprechend der Norm des Farbsignals vorgesehen ist. Im Beispielsfalle der PAL-Norm beträgt diese Frequenz 4,43 MHz. Damit liefert der zweite Mischer 5 ausgangsseitig ein Farbsignal, wie es von einem Wiedergabegerät, beispielweise einem Fernsehgerät, verarbeitet werden kann.

Neben dem verminderten Speicherbedarf weist diese Schaltungsanordnung außerdem den Vorteil auf, daß die Kammfilteranordnung im frequenzgeregelten Bereich der Anordnung arbeitet und damit unempfindlich gegen Frequenz- oder Phasenschwankungen des Farbträgers des ihr eingangsseitig zugeführten Farbsignals ist. Diese Eigenschaft wird dadurch erreicht, daß der Phasenkomparator 9 einen Phasenvergleich des von dem Quarzoszillators 6 und der Farbträgerfrequenz des Ausgangssignals des zweiten Mischers vornimmt. Bei gegebenenfalls auftretenden Farbschwankungen der Farbträgerfrequenz des Eingangssignals treten diese Phasenbzw. Frequenzschwankungen auch in dem Ausgangssignal des zweiten Mischers 5 auf. Der Phasenkomparator 9 liefert ein entsprechendes Korrektursignal an den spannungsgesteuerten Oszillator 10, der infolgedessen so nachgesteuert wird, daß das Ausgangssignal des ersten Mischers und damit auch das Ausgangssignal des zweiten Mischers 5 wieder auf Sollfrequenz liegt. Auf diese Weise werden Frequenz- und Phasenschwankungen der Farbträgerfrequenz des Eingangssignals ausgeregelt. Damit wird der Kammfilteranordnung bzw. ihren Speicheranordnungen 2 und 3 ein Farbsignal geliefert, das auf einer Farbträgerfrequenz mit nahezu konstanter Frequenz aufmoduliert ist. Somit kann diese Kammfilteranordnung optimal arbeiten.

In Fig. 2 ist eine zweite Ausführungsform der erfindungsgemäßen Schaltungsanordnung dargestellt, welche gleiche Schaltungselemente 1 bis 11 aufweist, welche mit Ausnahme des Phasenkomparators 9 in gleicher Weise verschaltet sind wie in Ausführungsbeispiel gemäß Fig. 1.

Die Schaltungsanordnung gemäß Fig. 2 weist anstelle dieses Phasenkomparators 9 einen Phasenkomparator 19 auf, der in gleicher Weise arbeitet wie der Phasenkomparator 9 der Schaltungsanordnung gemäß Fig. 1. Jedoch ist der Phasenkomparator 19 gemäß Fig. 2 in anderer Weise verschaltet. Dem Phasenkomparator 19 gemäß Fig. 2 wird das Ausgangssignal des Teilers 8 zugeführt. Außerdem wird ihm das Ausgangssignal des ersten Mischers 1 zugeführt. Der Phasenkomparator 19 in der Schaltungsanordnung gemäß Fig. 2 vergleicht also die Phasenlagen des Ausgangssignals des Teilers 8 und des ersten Mischers 1.

Die gesamte Schaltungsanordnung gemäß Fig. 2 arbeitet damit ähnlich wie diejenige gemäß Fig. 1, mit der Ausnahme, daß der spannungsgesteuerte Oszillator 10 ein Korrektursignal von dem Phasenkomparator 19 erhält, welches in Abhängigkeit der Phasendifferenz dieser beiden Signale generiert wird. An der grundsätzlichen Arbeitsweise der Schaltungsanordnung ändert dies nichts. Bei der Auslegung der Schaltungsanordnungen gemäß Fig. 1 bzw. gemäß Fig. 2 ist nur die unterschiedliche absolute Phasenlage der Ausgangssignale des ersten bzw. des zweiten Mischers zu berücksichtigen, die durch Phasenverzögerungen durch die Kammfilteranordnung bzw. durch den zweiten Mischer 5 erzeugt werden. In beiden Schaltungsanordnungen gelingt eine Ausregelung von Phasen- oder Frequenzschwankungen der Farbträgerfrequenz des vom Band gelesenen Farbsignals in der Weise, daß die Kammfilteranordnung im frequenzgeregelten Bereich liegt, d.h. ein Farbsignal geliefert bekommt, das einer konstanter Farbträgerfrequenz aufmoduliert ist.

## Patentansprüche

1. Schaltungsanordnung zur Verarbeitung eines von einem Videorekorder wiedergegebenen, einem Träger mit einer ersten Träger-Frequenz aufmodulierten Farbsignals (Color-Under-Signal), **dadurch gekennzeichnet,**
**daß** das der ersten Träger-Frequenz aufmodulierte Farbsignal einem ersten Mischer (1) zugeführt wird, mittels welchem das Farbsignal auf eine zweite Träger-Frequenz umgesetzt wird, welche höher ist als die erste Träger-Frequenz, daß das Ausgangssignal des ersten Mischers (1) einer Kammfilteranordnung (2, 3, 4) zugeführt wird, mittels welcher von Nachbarspuren in das wiedergegebene Farbsignal übersprechende Farbsignale unterdrückt werden,
und **daß** das Ausgangssignal der Kammfilteranordnung (2, 3, 4) einem zweiten Mischer (5) zugeführt wird, mittels welchem das kammgefilterte Signal auf eine dritte Träger-Frequenz umgesetzt wird, welche höher ist als die zweite Träger-Frequenz.

2. Schaltungsanordnung nach Anspruch 1, **dadurch gekennzeichnet,**
**daß** es sich bei der dritten Träger-Frequenz um die entsprechend einer Farbsignal-Norm vorgesehene Farbträgerfrequenz handelt.

3. Schaltungsanordnung nach Anspruch 2 zur Verarbeitung eines PAIL-Farbsignals,
**dadurch gekennzeichnet,**
**daß** die dritte Träger-Frequenz 4,43 MHz beträgt.

4. Schaltungsanordnung nach einem der Ansprüche 1 bis 3 zur Verarbeitung eines PAL-Farbsignals, **dadurch gekennzeichnet,**
**daß** die erste Träger-Frequenz das (40+1/8)-fache der Zeilenfrequenz des Farbsignals und die zweite Träger-Frequenz 4,43/2 MHz beträgt.

5. Schaltungsanordnung nach einem der Ansprüche 1 bis 4, **dadurch gekennzeichnet, daß** dem ersten Mischer (1) ein Mischsignal zugeführt wird, das mit dem der ersten Träger-Frequenz aufmodulierten Farbsignal gemischt wird, daß das Mischsignal aus einem Ausgangssignal eines spannungsgesteuerten Oszillators (10) abgeleitet ist, daß die Frequenz des Ausgangssignals des spannungsgesteuerten Oszillators (10) in Abhängigkeit des Ausgangssignals eines Phasenkomparators (19) gesteuert wird, dem eingangsseitig ein Signal von einem Teiler (8) und das Ausgangssignal des ersten Mischers (1) zugeführt werden.

6. Schaltungsanordnung nach einem der Ansprüche 1 bis 4, **dadurch gekennzeichnet, daß** dem ersten Mischer (1) ein Mischsignal zugeführt wird, das mit dem der ersten Träger-Frequenz aufmodulierten Farbsignal gemischt wird, daß das Mischsignal aus einem Ausgangssignal eines spannungsgesteuerten Oszillators (10) abgeleitet ist, daß die Frequenz des Ausgangssignals des spannungsgesteuerten Oszillators (10) in Abhängigkeit des Ausgangssignals eines Phasenkomparators (9) gesteuert wird, dem eingangsseitig ein Signal von einem Festozillator (6) und das Ausgangssignal des zweiten Mischers (5) zugeführt werden.

7. Schaltungsanordnung nach einem der Ansprüche 1 bis 6, **dadurch gekennzeichnet, daß** dem zweiten Mischer (5) einerseits das Mischsignal des ersten Mischers (1), welches der halben Farbträgerfrequenz entspricht, und anderseits eine feste Mischfrequenz, abgeleitet von einem Festoszillator (6) und einem Teiler (8), welche ebenfalls der halben Farbträgerfrequenz entspricht, zugeführt werden.

8. Videorekorder mit einer Schaltungsanordnung nach einem der Ansprüche 1 bis 7.

## Claims

1. A circuit arrangement for processing a color subcarrier signal reproduced by a video recorder and modulated on a carrier at a first carrier frequency, **characterized in that** the color subcarrier signal modulated on the first carrier frequency is applied to a first mixer (1) by which the color subcarrier signal is converted to a second carrier frequency which is higher than the first carrier frequency, **in that** the output signal of the first mixer (1) is applied to a comb filter circuit (2, 3, 4) which suppresses crosstalk color signals from adjacent tracks in the reproduced color signal, and **in that** the output signal of the comb filter circuit (2, 3, 4) is applied to a second mixer (5) by which the comb-filtered signal is converted to a third carrier frequency which is higher than the second carrier frequency.

2. The circuit arrangement as claimed in Claim 1, **characterized in that** the third carrier frequency is the color carrier frequency provided in accordance with a color signal standard.

3. The circuit arrangement as claimed in Claim 2 for processing a PAL color signal, **characterized in that** the third carrier frequency is 4.43 MHz.

4. The circuit arrangement as claimed in one of the Claims 1 to 3 for processing a PAL color signal, **characterized in that** the first carrier frequency is (40+1/8) times the duration of a picture line of a color subcarrier signal and the second carrier frequency is 4.43/2 MHz.

5. The circuit arrangement as claimed in one of the Claims 1 to 4, **characterized in that** the first mixer (1) is supplied with a mixing signal which is mixed with the color subcarrier signal modulated on the first carrier frequency, **in that** the mixing signal is derived from an output signal of a voltage-controlled oscillator (10), **in that** the frequency of the output signal of the voltage-controlled oscillator (10) is controlled in dependence on the output signal of a phase comparator (19) whose input is supplied with a signal from a divider (8) and the output signal of the first mixer (1).

6. The circuit arrangement as claimed in one of the Claims 1 to 4, **characterized in that** the first mixer (1) is supplied with a mixing signal which is mixed with the color subcarrier signal modulated on the first carrier frequency, **in that** the mixing signal is derived from an output signal of a voltage-controlled oscillator (10), **in that** the frequency of the output signal of the voltage-controlled oscillator (10) is controlled in response to the output signal of a phase comparator (9) whose input is supplied with a signal from a fixed oscillator (6) and with the output signal of the second mixer (5).

7. The circuit arrangement as claimed in one of the Claims 1 to 6, **characterized in that** the second mixer (5) is supplied with the mixing signal of the first mixer (1) corresponding to half the color carrier frequency, and also with a fixed mixing frequency derived from a fixed oscillator (6) and a divider (8) also corresponding to half the color carrier frequency.

8. A video recorder comprising the circuit arrangement as claimed in one of the Claims 1 to 7.

## Revendications

1. Circuit de traitement d'un signal couleur (Color-Under-Signal) reproduit par un magnétoscope et modulé sur une porteuse avec une première fréquence porteuse, **caractérisé en ce que** le signal couleur modulé sur la première fréquence porteuse est amené à un premier mélangeur (1) à l'aide duquel le signal couleur est converti sur une deuxième fréquence porteuse qui est supérieure à la première fréquence porteuse,
que le signal de sortie du premier mélangeur (1) est amené à un dispositif de filtre en peigne (2, 3, 4) à l'aide duquel les signaux couleur parasités par des pistes voisines dans le signal couleur reproduit sont supprimés,
et que le signal de sortie du dispositif de filtre en peigne (2, 3, 4) est amené à un deuxième mélangeur (5) à l'aide duquel le signal filtré en peigne est converti à une troisième fréquence porteuse qui est supérieure à la deuxième fréquence porteuse.

2. Circuit selon la revendication 1, **caractérisé en ce que** la troisième fréquence porteuse est la fréquence porteuse couleur prévue conformément à une norme de signal couleur.

3. Circuit selon la revendication 2 de traitement d'une signal couleur PAL, **caractérisé en ce que** la troisième fréquence porteuse s'élève à 4,43 MHz.

4. Circuit selon l'une des revendications 1 à 3 pour le traitement d'un signal couleur PAL, **caractérisé en ce que** la première fréquence porteuse s'élève à (40 + 1/8) de fois la fréquence de lignes du signal couleur et la fréquence de la deuxième porteuse s'élève à 4,43/2 MHz.

5. Circuit selon l'une des revendications 1 à 4, **caractérisé en ce qu'**il est amené au premier mélangeur (1) un signal de mélange qui est mélangé au signal de couleur modulé sur la première fréquence porteuse, que le signal de mélange est dérivé d'un signal de sortie d'un oscillateur (10) commandé par tension, que la fréquence du signal de sortie de l'oscillateur (10) commandé par tension est commandée en fonction du signal de sortie d'un comparateur de phase (19) auquel sont amenés côté entrée un signal d'un diviseur (8) et le signal de sortie du deuxième mélangeur (5).

6. Circuit selon l'une des revendications 1 à 4, **caractérisé en ce qu'**il est amené au premier mélangeur (1) un signal de mélange qui est mélangé au signal couleur modulé sur la première fréquence porteuse, que le signal de mélange est dérivé d'un signal de sortie d'un oscillateur (10) commandé par tension, que la fréquence du signal de sortie de l'oscillateur (10) commandé par tension est commandée en fonction du signal de sortie d'un comparateur de phase (9) auquel sont amenés côté entrée un signal d'un oscillateur fixe (8) et le signal de sortie du deuxième mélangeur (5).

7. Circuit selon l'une des revendications 1 à 6, **caractérisé en ce qu'**il est amené au premier mélangeur (5), d'une part, le signal de mélange du premier mélangeur (1) qui corresponde à la moitié de la fréquence porteuse couleur et, d'autre part, une fréquence de mélange fixe dérivée d'un oscillateur fixe (6) et d'un diviseur (8) qui correspond également à la moitié de la fréquence porteuse couleur.

8. Magnétoscope avec un circuit selon l'une des revendications 1 à 7.
